# FASCICULE DE BREVET EUROPEEN

(11) **EP 3 721 692 B1**
(45) Date de publication et mention de la délivrance du brevet: **08.05.2024**
(21) Numéro de dépôt: 20167802.6
(22) Date de dépôt: 02.04.2020
(51) Int. Cl.: A01C 17/00

(54) **DISPOSITIF D'ÉPANDAGE DE PARTICULES À GOULOTTE ROTATIVE**
PARTIKELSTREUVORRICHTUNG MIT DREHBARER RUTSCHE
DEVICE FOR SPREADING PARTICLES WITH ROTARY CHUTE

(30) Priorité: 04.04.2019 FR 1903606
(43) Date de publication de la demande: 14.10.2020
(73) Titulaire: Burel Production, 35220 Chateaubourg (FR)
(72) Inventeur: ARRIBARD, Gwennvel, 35000 Rennes (FR)
(74) Mandataire: Vidon Brevets & Stratégie

(56) Documents cités:
- EP-A1- 1 336 332
- EP-A1- 1 504 645
- WO-A1-98/09494
- FR-A- 1 435 922
- US-A- 4 469 210

## Description

### Domaine technique

Le domaine de l'invention est celui de l'épandage, dans le domaine de l'agriculture, de particules ou de produits se présentant sous la forme de grains, tels que des engrais ou des semences. Plus précisément, l'invention concerne les épandeurs centrifuges qui mettent en oeuvre un ou plusieurs disques mobiles en rotation.

### Art antérieur

Ces épandeurs centrifuges sont connus depuis longtemps. Ils mettent en oeuvre un ou plusieurs disques mobiles en rotation, équipés de pales. Le produit à épandre peut notamment être stocké dans une trémie, et amené ou déversé au-dessus de chaque disque par une goulotte, qui laisse tomber le flux de particules en chute libre sur le disque, de façon à ce qu'il soit projeté par l'intermédiaire des pales sur le terrain sur lequel il doit être déposé. Un exemple de cette approche est décrit dans les documents de brevet EP 0 170 605 ou EP 2 454 928, au nom du Demandeur. Au sens de la présente invention, on entend, par goulotte, un conduit, ou couloir incliné, ou toboggan, qui sert au transport par pesanteur des particules, de la trémie vers le disque rotatif. Un autre exemple d'épandeur comprenant une goulotte rotative peut être contemplé dans le document US4469210 A qui est considéré comme l'état de la technique le plus proche.

Dans d'autres épandeurs existants, le produit à épandre tombe directement de la trémie sur le disque d'épandage, au travers d'un ou plusieurs orifice(s) ménagé(s) dans le fond de la trémie. Le fond de la trémie est alors rotatif, et le réglage de la largeur d'épandage s'effectue en faisant pivoter les orifices d'alimentation autour de l'axe de rotation des plateaux, ce qui modifie la position du point de dépose du produit sur le disque. Un tel exemple d'épandeur est décrit dans le document de brevet FR 1 435 922.

Dans les épandeurs équipés de goulottes, tels que conçus et commercialisés par le Demandeur, le réglage de la largeur d'épandage s'effectue en faisant pivoter la goulotte d'alimentation autour d'un axe déporté, fixé sur la partie inférieure latérale du fond doseur. Le déplacement de la goulotte entraîne un déplacement du point de chute des particules sur le disque d'épandage, et donc une modification de la zone de couverture de la nappe d'épandage et de sa position par rapport à l'épandeur. En effet, le déplacement du point de chute influe notamment sur l'angle moyen d'éjection des particules de chacun des disques d'épandage, par rapport à l'axe d'avancement de l'épandeur.

L'utilisation d'une goulotte présente de nombreux avantages par rapport à la mise en oeuvre d'un fond rotatif équipé d'orifices de passage des particules à épandre, parmi lesquels un accès plus facile pour le nettoyage des pièces mécaniques, et des risques de colmatage réduits. Elle permet également une bonne gestion de l'épandage en bordure de parcelle, notamment grâce au système Tribord^{®} du Demandeur : ce système d'épandage de bordure repose sur le déplacement radial de la goulotte par rapport à l'axe de rotation des plateaux pour alimenter une pale spécifique de bordure fixée à demeure sur le disque d'épandage côté droit. Il permet un épandage de précision, le long d'un cours d'eau par exemple, ou le long d'une parcelle cultivée, sans descendre du tracteur grâce à une commande électrique depuis la cabine. Un tel système Tribord^{®} est notamment décrit dans les documents de brevet EP 1 955 579 B1 et EP 1 336 332 B1 au nom du Demandeur.

Si ce système d'épandage à base de goulotte présente donc de nombreux avantages, le Demandeur a cependant identifié un besoin d'amélioration de la précision de l'épandage obtenue avec un tel système. En effet, il a constaté, en fonction de la position de la goulotte, une modification de la position et de la forme du point de chute du flux de particules sur le disque d'épandage, ce qui a un impact sur la forme de la nappe d'épandage et donc sur la qualité du travail (facilité de réglage).

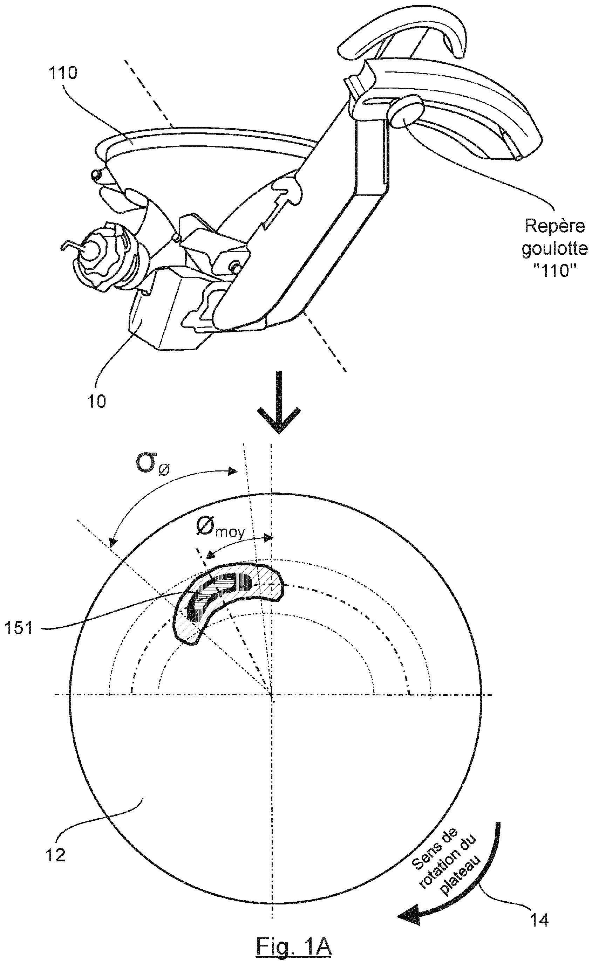

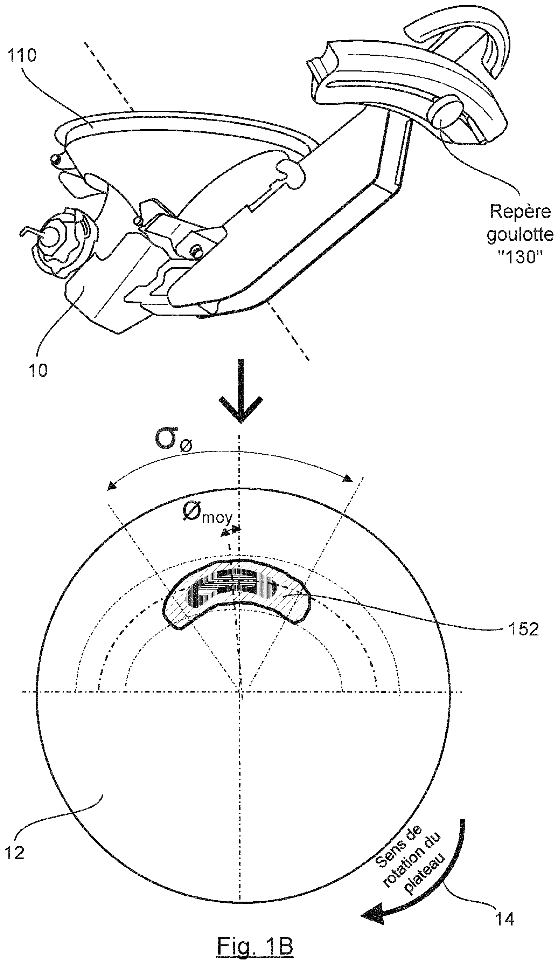

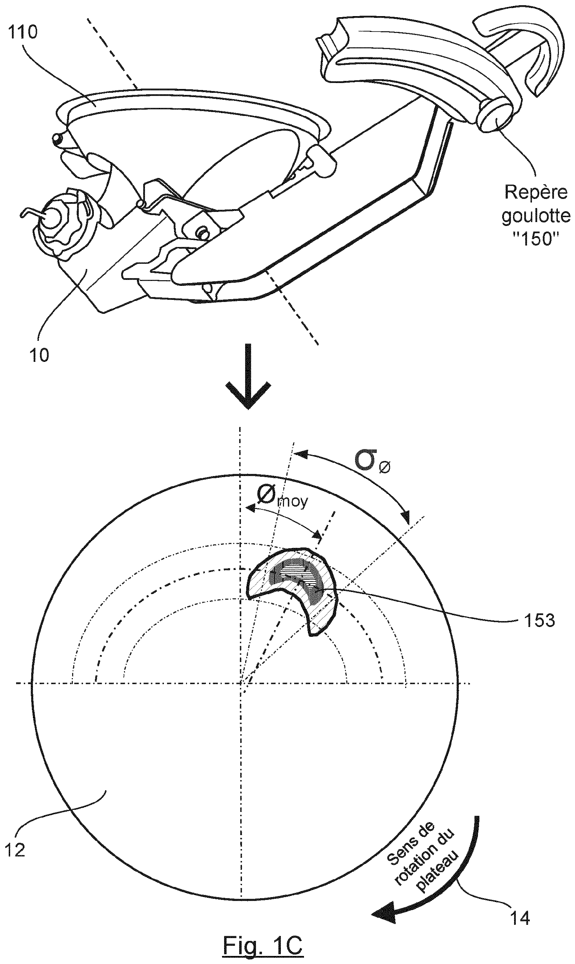

Cette déformation du point de chute est illustrée par les figures Fig. 1A à Fig. 1C, qui présentent trois positions différentes de la goulotte 10 au-dessus du disque d'épandage 12 (repère goulotte « 110 » pour Fig. 1A, repère goulotte « 130 » pour Fig. 1B et repère goulotte « 150 » pour Fig. 1C). Pour chacune de ces trois positions, on a illustré la géométrie (position et forme) correspondante du point de chute 151, 152, 153 des particules sur le disque 12. Les particules à épandre, stockées dans la trémie 11, sont déversées sur le disque 12 par la goulotte 10, puis projetées par les pales (non représentées) ; la flèche référencée 14 illustre le sens de rotation du disque d'épandage 12. Comme on peut le constater, deux problèmes se posent. D'une part, le déplacement de la goulotte 10 du repère « 110 » au repère « 150 » n'entraîne pas un déplacement purement angulaire du point de chute sur le disque 12 ; d'autre part, ce déplacement de la goulotte 10 du repère « 110 » au repère « 150 » entraîne une modification de sa forme sur le disque : ainsi, dans la position intermédiaire correspondant à la goulotte 10 dans une position repère « 130 » (Fig. 1B), le point de chute 152 présente une forme plus allongée que les points de chute 151 et 153 des deux autres figures (Fig. 1A et Fig. 1C), ce qui signifie qu'il y a une plus grande diversité dans la position exacte du point d'impact des particules avec le disque 12. Ceci se traduit par un plus grand écart type σ_{θ} sur l'angle d'épandage au sol.

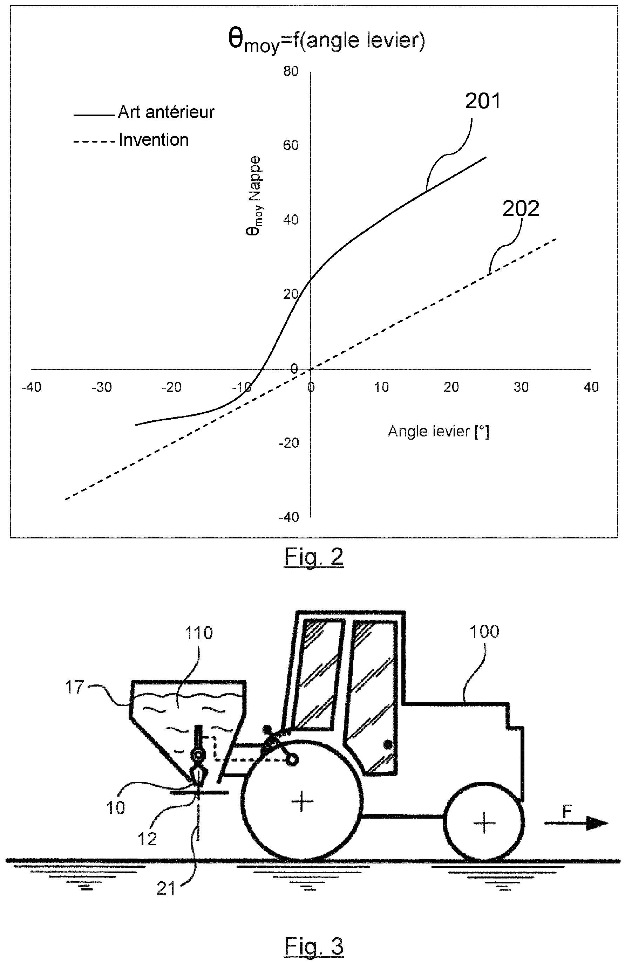

En d'autres termes, la courbe liant le déplacement de la goulotte à l'angle moyen θ_{moy} d'éjection des particules du disque n'est pas linéaire, et un même déplacement angulaire de la goulotte n'entraîne pas toujours la même variation de cet angle, en fonction de la position de la goulotte. Ceci est illustré par la courbe référencée 201 de la figure 2, qui illustre la variation de la valeur de l'angle moyen θ_{moy} en fonction du déplacement angulaire de la goulotte (angle du levier portant la goulotte, exprimé en degrés).

Il est en effet commun de caractériser la nappe d'épandage à partir de l'angle θ moyen d'éjection des particules du disque, mesuré par rapport à l'axe d'avancement de la machine d'épandage. Or, dans les exemples des figures 1A à 1C, pour une même faible dose délivrée sur le disque de 9 Kg/min, l'écart-type sur l'angle d'épandage au sol σ_{θ} varie fortement de Fig. 1A à Fig. 1C, avec une valeur maximale pour Fig. 1B.

Ces variations de l'écart-type angulaire, induites par la modification de la géométrie du point de chute, entraînent des variations de la forme de la nappe d'épandage, et nuisent à la précision du contrôle de l'épandage.

Le document de brevet US 4 469 210 décrit un épandeur de particules, dit traîné, comprenant une goulotte ajustable en rotation, selon un axe coïncidant sensiblement avec celui du disque rotatif. Un tel épandeur est particulièrement encombrant et manque de compacité : en effet, les particules à épandre sont stockées dans une trémie parallélépipédique, qui présente en sa partie arrière une trappe ajustable, au travers de laquelle s'écoulent les particules à épandre, avant de tomber sur le tapis d'un convoyeur. Ce convoyeur s'étend sur la longueur de l'épandeur, et achemine les particules jusqu'à la partie arrière de l'épandeur, où elles tombent, par gravité, de l'extrémité arrière du tapis du convoyeur. Elles sont alors transportées par l'intermédiaire d'une goulotte jusqu'au disque d'épandage.

Si la structure particulière de cette goulotte permet de s'affranchir des difficultés susmentionnées de déformation du point de chute pour les épandeurs à convoyeur, elle n'est pas directement adaptable aux épandeurs portés, qui doivent répondre à de fortes exigences de compacité.

Il existe donc un besoin d'une nouvelle technique d'épandage de particules mettant en oeuvre une goulotte de dépose des particules à épandre de la trémie vers les disques d'épandage, qui ne présente pas ces différents inconvénients de l'art antérieur.

Il existe notamment un besoin d'une telle technique, qui permette, dans un épandeur compact, d'améliorer la précision de l'épandage et le réglage de sa largeur, en minimisant la déformation du point de chute.

Il existe également un besoin d'une telle technique qui soit mécaniquement simple, peu coûteuse, et moins encombrante en hauteur et en longueur que selon l'art antérieur.

### Exposé de l'invention

L'invention répond à ce besoin en proposant un dispositif d'épandage de particules stockées dans au moins une trémie présentant au moins une ouverture de sortie délivrant des particules dans au moins une goulotte dont une extrémité de sortie est placée au-dessus d'un disque d'épandage rotatif recevant et projetant lesdites particules.

Selon l'invention, une telle goulotte est montée dans le prolongement d'un levier de réglage mobile en rotation autour d'un axe de rotation sensiblement vertical coïncidant avec un axe de rotation du disque d'épandage. En outre, un fond de dosage forme partie inférieure de la trémie et présente une section circulaire sensiblement horizontale, dite portion circulaire, autour de laquelle se déplace le levier de réglage, sur au moins une portion du fond.

Ainsi, l'invention repose sur une approche tout à fait nouvelle et inventive des systèmes d'épandage compacts à base de goulotte. En effet, l'invention propose avantageusement, d'une part, de concevoir une trémie à fond circulaire, ou cylindrique, et d'autre part, d'utiliser avantageusement la forme nouvelle de ce fond pour guider la rotation de la goulotte. En d'autres termes, l'invention propose de confondre l'axe de rotation de la goulotte et l'axe de révolution du plateau, en montant la goulotte sur un levier de réglage mobile en rotation autour d'un axe correspondant à l'axe de rotation du disque d'épandage. De cette façon, le déplacement de la goulotte induit un déplacement de la position du point de chute des particules sur le disque, mais induit peu de modification de sa géométrie. La variation de l'angle et de l'écart-type sur l'angle d'épandage obtenu au sol est ainsi fortement réduite par rapport aux solutions de l'art antérieur, ce qui permet un meilleur contrôle de la précision d'épandage.

En effet, la technique d'épandage du Demandeur, qui permet de fournir à ses utilisateurs une large gamme de réglage de largeurs d'épandage, repose sur l'hypothèse théorique d'une nappe d'épandage définie par rapport à un repère géométrique central, que l'on fait tourner autour de l'axe du plateau ou disque d'épandage. Dans la solution de l'art antérieur, le déplacement de la goulotte autour d'un axe déporté par rapport à cet axe de rotation induit, comme expliqué ci-avant, certains écarts entre la théorie et la réalité de l'épandage, notamment dans les positions extrêmes de la goulotte.

La conception d'une goulotte dont le déplacement en rotation se fait selon un axe confondu avec l'axe de rotation du disque permet de réduire ces écarts, en se rapprochant des hypothèses théoriques utilisées pour la réalisation des tableaux de réglage.

En outre, une telle conception du système de rotation de la goulotte permet de maintenir constante la distance séparant le point le plus bas de la goulotte et le disque d'épandage et ce, quelle que soit la position de la goulotte. Le système est donc plus compact, et présente un encombrement réduit en hauteur par rapport aux solutions de l'art antérieur, dans lesquelles le déplacement de la goulotte entraînait une variation de la hauteur de la goulotte par rapport au disque d'épandage, et aux pales.

En outre, le dispositif d'épandage selon un mode de réalisation de l'invention utilise avantageusement la géométrie circulaire du fond de dosage (par exemple la partie supérieure du fond) pour réaliser une liaison pivot avec le levier de réglage portant la goulotte, ce qui accroît encore la compacité de l'épandeur par rapport aux solutions connues de l'art antérieur. Les particules tombent directement du fond de la trémie dans la goulotte, qui les conduit par gravité jusqu'au disque d'épandage. On notera que, pour ce faire, il convient de positionner précisément la trémie par rapport aux disques d'épandage, pour s'assurer que le fond de dosage circulaire et les plateaux d'épandages sont concentriques.

Cette exploitation avantageuse d'une forme spécifique circulaire du fond de dosage permet également d'éviter de perturber le fonctionnement des autres organes d'épandage, tels que le mécanisme d'agitation.

Selon un autre aspect de l'invention, le levier de réglage est solidarisé à une couronne de guidage disposée sous ou sur la périphérie de la portion circulaire du fond de dosage. Une telle couronne court le long de la portion circulaire du fond, et permet un guidage optimal du mouvement de rotation du levier de réglage portant la goulotte autour de l'axe de symétrie de la portion circulaire du fond, qui coïncide avec l'axe de rotation du disque.

Selon un mode de réalisation, la portion circulaire du fond de dosage porte des éléments de support de la couronne de guidage.

Selon une première variante de réalisation, de tels éléments de support sont par exemple des éléments de support en matériau polymère fixés par le dessous à la portion circulaire du fond de dosage, et la couronne de guidage est guidée en rotation entre les éléments de support et la portion circulaire dudit fond de dosage.

De tels éléments de support se présentent donc sous forme de patins, formant des surfaces d'appui planes entre la couronne de guidage et le fond de dosage, répartis le long de la circonférence de la portion circulaire du fond de dosage. Ils permettent une conception aérée du mécanisme de rotation de la goulotte, et donc une facilité accrue du nettoyage des différents composants du mécanisme, notamment pour en extraire la poussière de particules susceptible de s'y accumuler en fonctionnement.

De tels éléments de support pourraient également, en variante, être fixés par le dessus sur un rebord disposé dans la partie inférieure de la portion circulaire du fond. D'autres matériaux pourraient également être utilisés, de préférence des matériaux réduisant les frottements. Avantageusement, la couronne de guidage présente une zone de contact linéaire avec les éléments de support et/ou la portion circulaire du fond de dosage. Ceci facilite ainsi le déplacement de la couronne de guidage, en réduisant les frottements, et les risques d'encrassement du mécanisme.

Selon une première variante de réalisation, les éléments de support comprennent au moins une portion présentant une section sensiblement triangulaire de façon à présenter une zone de contact linéaire avec la couronne de guidage. De tels éléments de support peuvent consister en un anneau de support de section triangulaire permettant à la couronne de guidage d'être en contact continu avec le fond sur toute la circonférence de sa portion circulaire : cette zone de contact n'est cependant pas une surface bidimensionnelle, mais une ligne de contact le long de la périphérie.

Selon une deuxième variante de réalisation, la couronne de guidage présente une section sensiblement triangulaire de façon à présenter une zone de contact linéaire avec les éléments de support et/ou la portion circulaire du fond de dosage..

Selon un autre aspect d'un mode de réalisation de l'invention, un tel dispositif d'épandage comprend également un agitateur oscillant porté par un arbre sensiblement horizontal, disposé dans le fond de dosage. Dans un tel dispositif d'épandage, comprenant deux fonds de dosage et deux disques d'épandage, l'arbre sensiblement horizontal porte deux agitateurs oscillants disposés respectivement dans chacun des deux fonds de dosage.

Ainsi, un tel dispositif de dosage permet d'améliorer la précision de l'épandage, grâce à un système astucieux de rotation de la goulotte, mais sans complexifier la ligne d'agitation par rapport aux solutions de l'art antérieur. En effet, la ligne d'agitation présente une conception simple, comprenant un arbre horizontal fixe, animé par un mouvement oscillant. Cet arbre peut en outre être mutualisé pour les deux fonds de dosage, ce qui offre une grande simplicité d'intégration.

### Présentation des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
[Fig. 1A] présente la forme et la position du point de chute des particules sur un disque d'épandage selon une technique de l'art antérieur, ainsi que la forme de la nappe d'épandage résultante, pour une première position de la goulotte du dispositif d'épandage ;
[Fig. 1B] présente la forme et la position du point de chute des particules sur un disque d'épandage selon une technique de l'art antérieur, ainsi que la forme de la nappe d'épandage résultante, pour une deuxième position de la goulotte du dispositif d'épandage ;
[Fig. 1C] présente la forme et la position du point de chute des particules sur un disque d'épandage selon une technique de l'art antérieur, ainsi que la forme de la nappe d'épandage résultante, pour une troisième position de la goulotte du dispositif d'épandage ;
[Fig. 2] propose une comparaison de la variation de l'angle moyen d'éjection des particules θ_{moy} en fonction du déplacement angulaire du levier de réglage de la goulotte, selon l'art antérieur d'une part, et selon un mode de réalisation de l'invention d'autre part ;
[Fig. 3] illustre un tracteur, équipé d'un dispositif d'épandage selon un mode de réalisation de l'invention ;
[Fig. 4] présente une vue de dessus du tracteur de Fig. 1, et des nappes d'épandage obtenues au sol ;
[Fig. 5] présente une vue d'ensemble d'un dispositif d'épandage selon un mode de réalisation de l'invention ;
[Fig. 6] illustre le schéma de principe du dispositif de dosage de Fig. 5 ;
[Fig. 7A] est la figure pendante de Fig. 1A, pour le dispositif d'épandage selon un mode de réalisation de l'invention ;
[Fig. 7B] est la figure pendante de Fig. 1B, pour le dispositif d'épandage selon un mode de réalisation de l'invention ;
[Fig. 7C] est la figure pendante de Fig. 1C, pour le dispositif d'épandage selon un mode de réalisation de l'invention ;
[Fig. 8] présente une vue éclatée des différents composants du dispositif d'épandage de Fig. 5, et leur principe d'assemblage ;
[Fig. 9] présente une vue de dessous du dispositif d'épandage de Fig. 5 ;
[Fig. 10] illustre un mode de réalisation des éléments de support de Fig. 8 ;
[Fig. 11] présente une vue en coupe du dispositif d'épandage selon un mode de réalisation de l'invention comprenant des éléments de support tels qu'illustrés sur Fig. 10 ;
[Fig. 12] présente une vue agrandie du détail A de Fig. 11 ;
[Fig. 13] illustre le mécanisme d'agitation d'un dispositif d'épandage selon un mode de réalisation de l'invention ;
[Fig. 14] présente un mode de réalisation du dispositif d'épandage dans lequel le levier de réglage est équipé d'un actionneur.

### Description des modes de réalisation

Le principe général de l'invention repose sur une amélioration du système existant d'épandage à base de goulotte, dans lequel la trémie présente un fond de dosage circulaire, dont la géométrie particulière permet le guidage de la goulotte, qui est mobile en rotation autour d'un axe qui coïncide avec l'axe de rotation du disque d'épandage. Ainsi, on permet un déplacement du point de chute des particules à épandre sur le disque, pour un réglage optimal de la largeur d'épandage, sans induire de modification de la forme de la zone d'impact des particules sur le disque. Ainsi, la courbe 202 liant le déplacement angulaire de la goulotte à l'angle moyen d'éjection des particules des disques d'épandage est désormais linéaire, comme illustré sur Fig. 2.

Un tel dispositif d'épandage équipe une machine permettant d'épandre de l'engrais solide ou des semis sur une parcelle cultivable, dont un exemple est illustré schématiquement sur Fig. 3. Elle se présente sous la forme d'un tracteur 100 équipé d'une trémie 110 contenant l'engrais ou les graines 17 à épandre.

Le fond de la trémie 110 comprend deux ouvertures, puis deux dispositifs d'alimentation réglables, puis deux dispositifs de réglage de la distribution de l'engrais se présentant par exemple sous la forme de goulottes 10 (une seule étant illustrée), laissant passer des particules 17 contenues dans la trémie 110, et placé en surplomb de deux distributeurs comprenant chacun un disque rotatif 12 portant des pales de projection.

Les disques 12 sont le plus souvent disposés dans une position sensiblement horizontale et leur rotation autour d'un axe 21 sensiblement vertical assure la projection du contenu 17 de la trémie par effet centrifuge, sous la forme d'une nappe, en forme générale de croissant, s'étendant à l'arrière de la machine d'épandage.

Les deux disques rotatifs tournent en sens inverses l'un par rapport à l'autre, ce qui permet de réaliser un épandage en engrais et/ou en semis sur une grande largeur, classiquement comprise entre 5 et 50 mètres.

De telles machines d'épandage permettent de traiter une parcelle de terrain cultivable, ou champ, le plus souvent en suivant un trajet prédéfini d'aller/retour sur celle-ci mais aussi avec des trajectoires non imposées (par exemple pour l'épandage sur prairie).

Le conducteur de la machine peut adapter certains réglages d'épandage, tels que, selon les cas, la quantité ou la dose de particules distribuées, la forme de la nappe d'épandage, et notamment sa largeur,... Il peut par ailleurs ouvrir ou fermer sélectivement le dispositif d'alimentation de la goulotte 10, de façon à optimiser les quantités de particules épandues, notamment en fourrière, en bordure, en bout ou en pointe de champ.

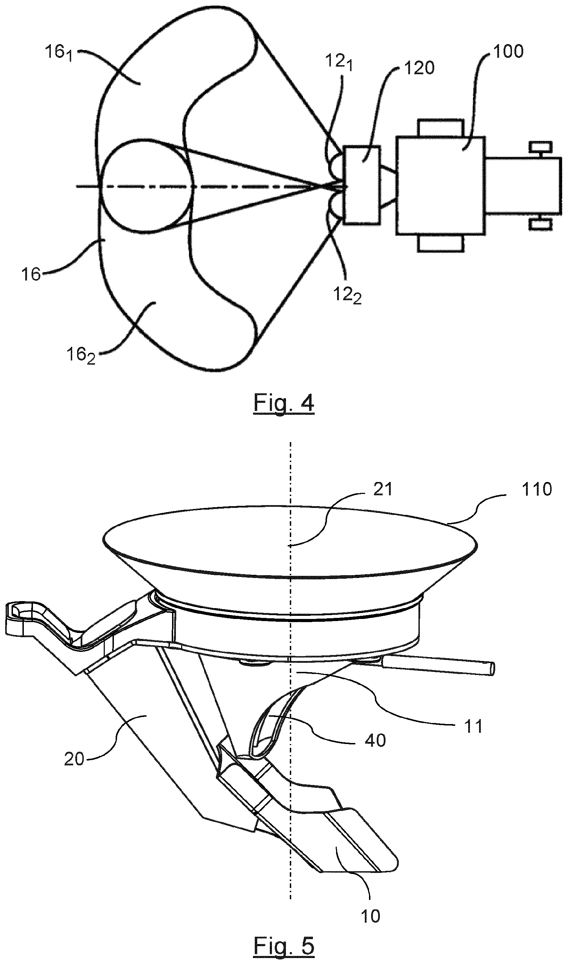

Fig. 4 illustre une vue de dessus du tracteur de Fig. 3. Sur cette figure, le tracteur 100 transporte des moyens de distribution de particules 120, par exemple d'engrais granulés ou de semis. Il est équipé de deux distributeurs alimentant deux disques 12₁ et 12₂, qui assurent la projection des particules respectivement sur des surfaces 16₁ et 16₂, définissant ensemble une surface de couverture 16, éloignée de 5 à 30 m des moyens de distribution 120, et définissant une forme générale de croissant. On présente désormais, en relation avec Fig. 5 une vue d'ensemble d'un dispositif d'épandage selon un mode de réalisation de l'invention, et plus particulièrement du fond 11 de la trémie 110. Dans l'exemple de Fig. 5, un tel fond présente, dans sa partie supérieure, une section sensiblement circulaire, en forme de bol : il peut être réalisé en matériau plastique, ou se présenter sous forme d'un réceptacle en acier. Il est disposé en partie inférieure de la trémie 110. Dans la partie inférieure du fond, une paroi latérale de ce dernier porte une ouverture 40, par laquelle les particules à épandre peuvent s'écouler de l'intérieur vers l'extérieur de la trémie 110, par exemple pour être déversées sur une goulotte 10, puis déposées sur un disque d'épandage. Dans un mode de réalisation, cette ouverture peut être obturée au moyen d'une trappe incurvée, mobile en rotation autour d'un axe. La trappe incurvée, dans cet exemple, présente une surface correspondant sensiblement à une portion de cylindre. Un actionneur de la trappe rotative peut permettre de piloter le déplacement de la trappe, d'une position d'obturation maximum de l'ouverture, dans laquelle le débit d'écoulement gravitaire du produit à épandre est nul, vers une position de libération maximale de l'ouverture, dans laquelle le débit d'écoulement gravitaire du produit à épandre est maximum.

Dans un autre mode de réalisation non illustré, cette ouverture peut être obturée au moyen d'une trappe plane mobile en translation par rapport à la paroi latérale du fond.

Les particules 17 contenues dans la trémie s'écoulent au travers de cette ouverture et tombent sur une goulotte 10, avant d'être guidées sur le disque d'épandage. Cette goulotte 10 est montée sur un levier de réglage 20, qui est mobile en rotation autour du fond 11, selon un axe 21 correspondant sensiblement à l'axe de rotation du disque 12, ou plateau.

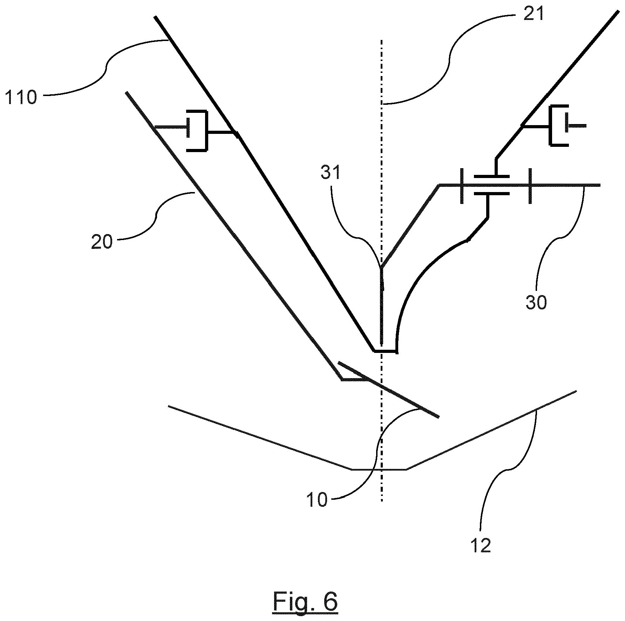

Les mouvements relatifs des différents composants du dispositif de Fig. 5 seront mieux compris en observant le schéma de principe de Fig. 6, qui illustre la cinématique du dispositif. Le fond de la trémie 110 présente, dans sa partie supérieure, une section circulaire, dont un axe de symétrie centrale coïncide avec l'axe 21 de rotation du plateau ou disque 12. La goulotte 10 est portée par un levier de réglage 20, qui est mobile en rotation autour du fond circulaire, selon un axe qui coïncide avec l'axe 21 de rotation du disque 12. Lorsque le levier de réglage 20 pivote autour du fond, il entraîne en déplacement la goulotte 10, ce qui induit un déplacement du point de chute des particules à épandre sur le disque 12. Un tel levier de réglage 20 permet donc d'agir sur le réglage de la largeur d'épandage.

La rotation de la goulotte 10 s'opérant selon un axe confondu avec l'axe de rotation 21 du disque 12, ce déplacement induit cependant peu de modification de la géométrie de la zone d'impact des particules avec le disque 12, et donc peu de modification de la forme de la nappe d'épandage 16. On obtient ainsi un réglage de la largeur d'épandage performant et précis.

On observe également sur Fig. 6 un arbre horizontal 30 qui traverse la paroi latérale du fond 11, et porte une dent d'agitation 31. Un tel arbre 30, optionnel, est par exemple animé d'un mouvement oscillant, et permet d'agiter le produit à épandre, pour en faciliter l'écoulement gravitaire.

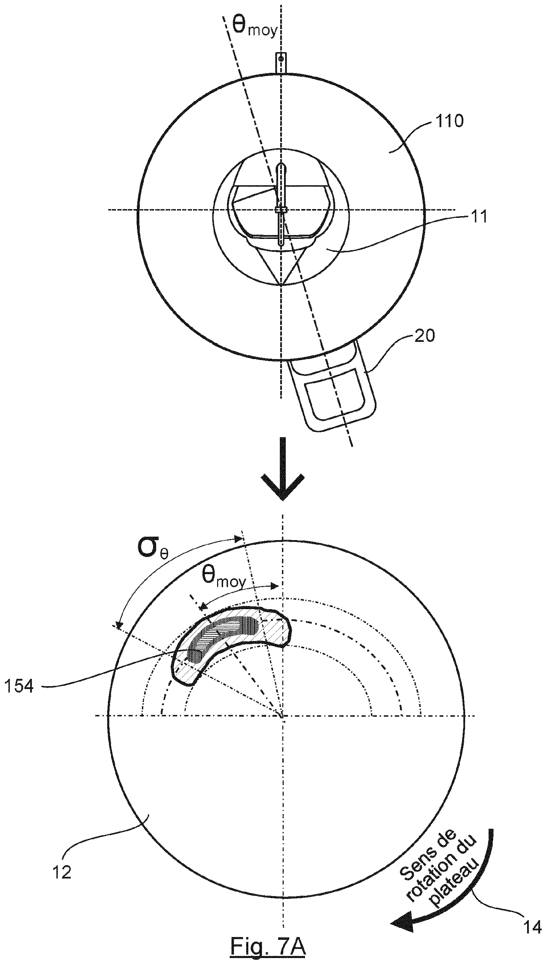

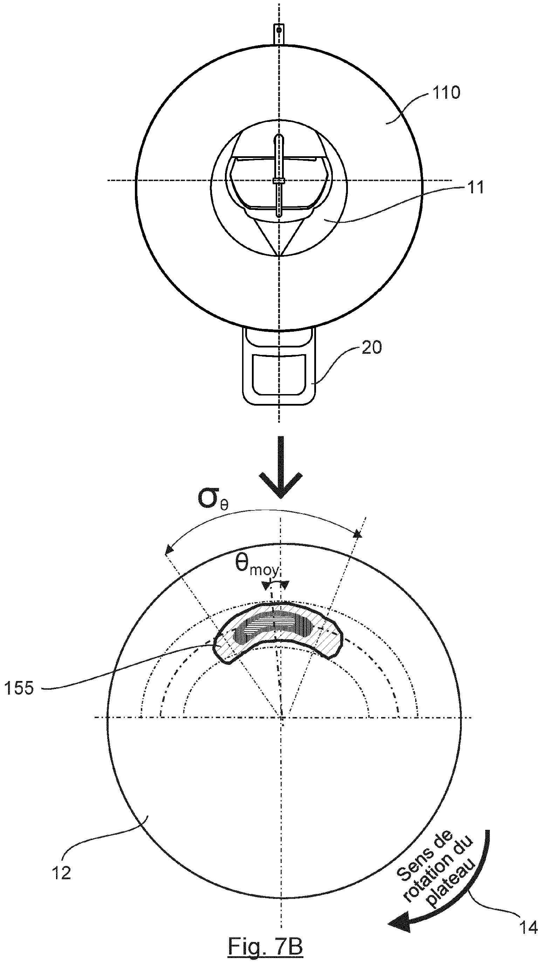

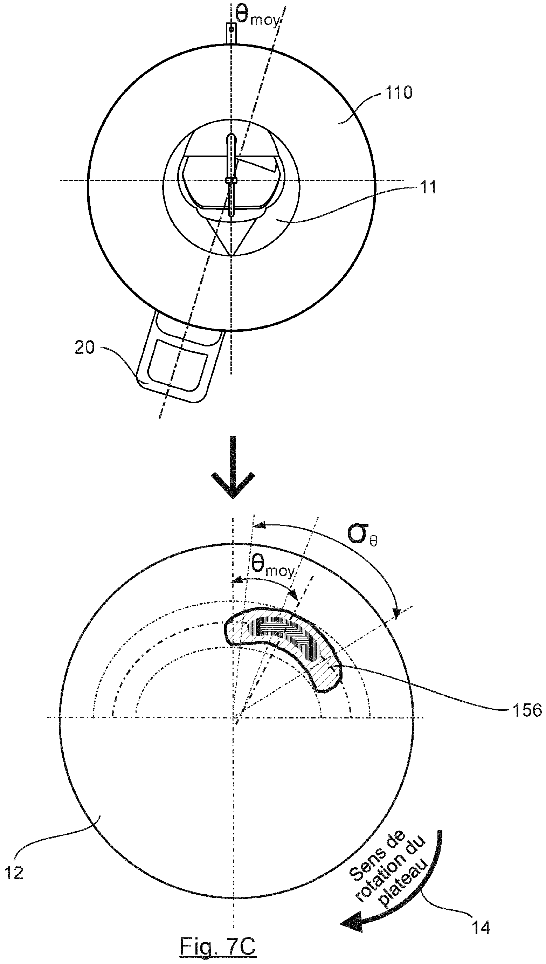

L'absence de modification de la géométrie du point de chute des particules selon les différents modes de réalisation de l'invention peut être mieux observée sur les figures Fig. 7A à Fig. 7C, qui doivent être comparées aux figures Fig. 1A à Fig. 1C de l'art antérieur.

Ces figures Fig. 7A à Fig. 7C présentent trois positions différentes de la goulotte 10 au-dessus du disque d'épandage 12, comme le montre le déplacement du levier de réglage 20 d'une figure à l'autre. Pour chacune de ces trois positions, on a illustré la géométrie (position et forme) correspondante du point de chute 154, 155, 156 des particules sur le disque 12. Les particules à épandre, stockées dans la trémie, sont déversées sur le disque 12 par la goulotte, puis projetées par les pales ; la flèche référencée 14 illustre le sens de rotation du disque d'épandage 12. Comme on peut le constater, le déplacement en rotation de la goulotte entraîne un déplacement angulaire de la position du point de chute 154, 155, 156 sur le disque 12, mais n'induit plus de modification de sa forme sur le disque. La variation de l'écart-type sur l'angle d'épandage au sol est donc fortement réduite, et l'écart-type angulaire σ_{θ} est sensiblement constant et identique pour les trois figures Fig. 7A à Fig. 7C.

En conséquence, les nappes d'épandage correspondantes obtenues au sol ont toutes trois sensiblement la même forme, seul leur décalage angulaire θ_{moy} par rapport à l'axe d'avancement du tracteur change.

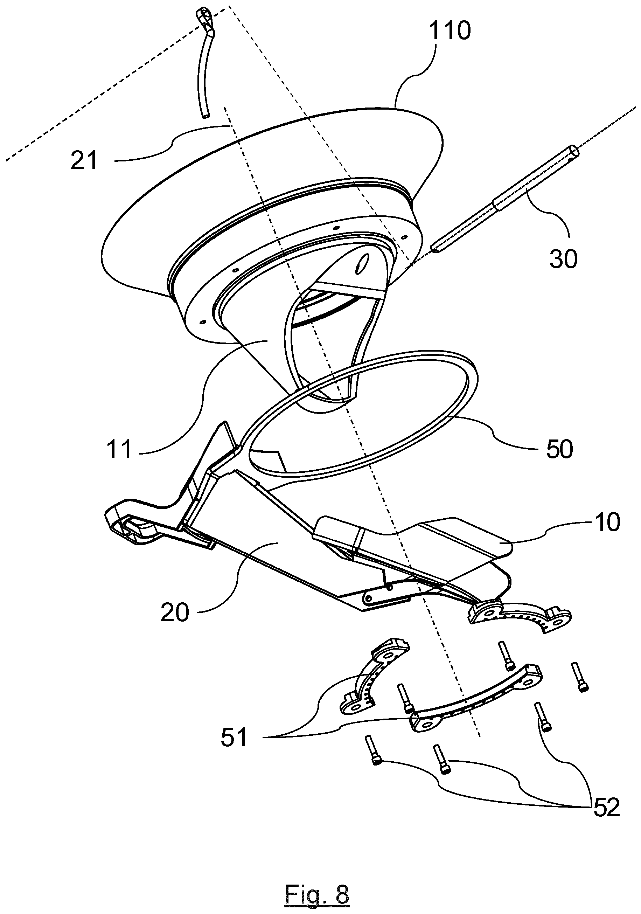

Fig. 8 présente une vue éclatée du dispositif d'épandage de Fig. 5 selon un mode de réalisation qui exploite avantageusement la géométrie circulaire de la partie supérieure du fond 11 pour réaliser la liaison pivot entre le fond 11 et le levier de réglage 20.

Comme illustré, le levier de réglage 20 porte une couronne de guidage 50, qui vient en appui sous la partie inférieure de la portion circulaire du fond 11. En variante, cette couronne de guidage 50 pourrait pivoter autour de la périphérie de cette portion circulaire. Des guides ou supports 51, par exemple en matériau polymère, présentent une section en T. Ils sont fixés au moyen de vis ou rivets 52 sous la portion circulaire du fond 11. Lors de la rotation du levier de réglage 20, la couronne de guidage 50 coulisse entre la portion circulaire du fond et ces éléments de support 51, qui peuvent être solidarisés deux par deux pour une rigidité accrue.

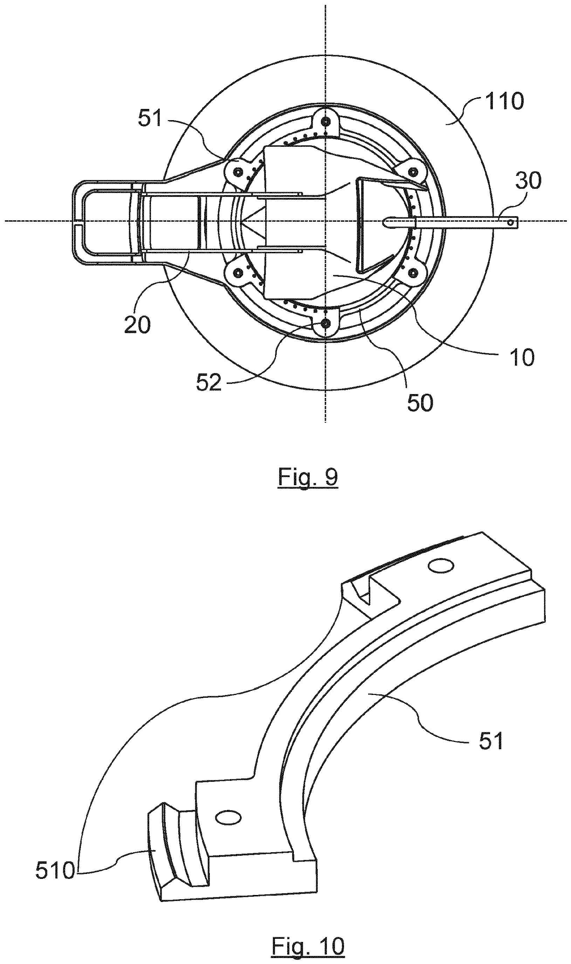

Ces éléments de support forment de petites surfaces d'appui planes (par exemple quelques centimètres) pour la couronne de guidage 50. Ils sont de préférence répartis de façon régulière sur la circonférence de la portion circulaire du fond. Fig. 9 présente une vue de dessous après assemblage du dispositif de Fig. 8.

Dans une variante de réalisation, non illustrée, les éléments de support 51 ne prennent pas la forme de patins, mais d'un anneau de guidage, qui présente une zone de contact linéaire avec la couronne de guidage 50. Cet anneau de guidage est par exemple monté sous la portion circulaire du fond 11.

Afin de faciliter le coulissement de la surface de la couronne de guidage 50 sur les éléments de support 51, ou sur l'anneau de guidage, on peut prévoir que la couronne de guidage 50 présente une section sensiblement triangulaire de façon à présenter une zone de contact linéaire avec les guides 51 et/ou l'anneau de guidage et/ou la portion circulaire du fond 11. Il est aussi possible de prévoir que l'anneau de guidage présente une section triangulaire, pour réduire la surface de contact avec la couronne de guidage 50.

Fig. 10 illustre une variante de réalisation des éléments de support 51, selon laquelle ils présentent au moins une portion 510 de section sensiblement triangulaire, afin de présenter une zone de contact linéaire avec la couronne de guidage 50, et ainsi réduire les risques d'encrassement et de frottement.

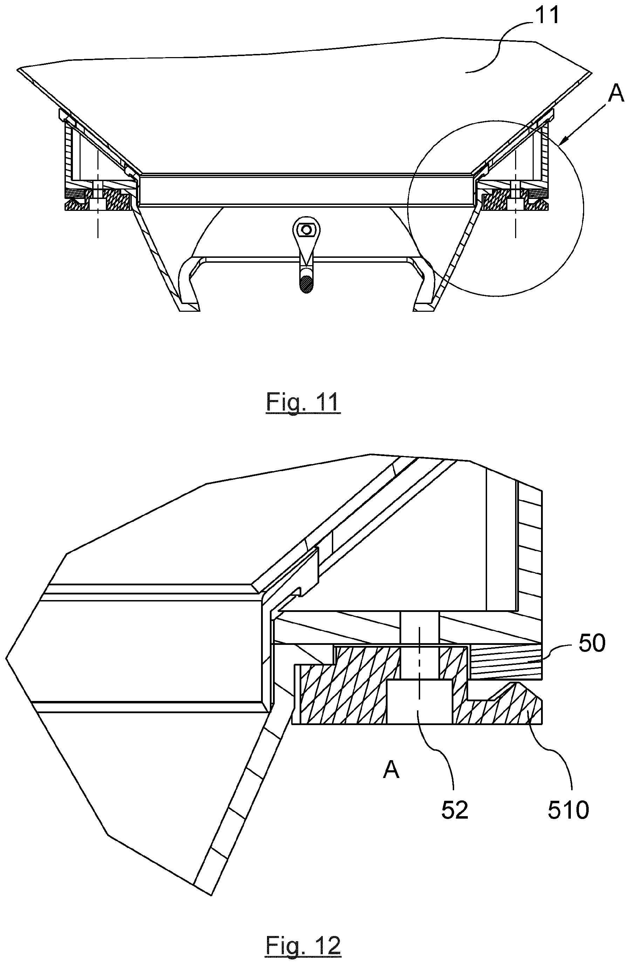

Fig. 11 présente une vue en coupe du dispositif d'épandage selon un mode de réalisation de l'invention, comprenant des éléments de support 51 tels qu'illustrés sur Fig. 10. Fig. 12 offre une vue agrandie du détail A signalé sur la vue en coupe de Fig. 11.

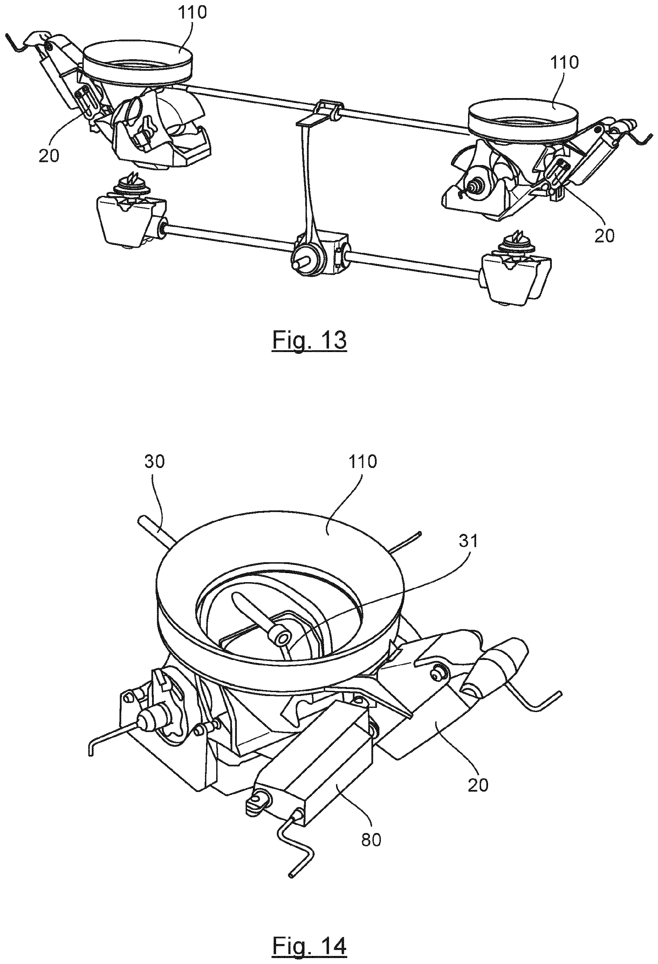

Une telle conception permet de conserver les points forts d'un dispositif de dosage à trappe incurvée rotative, sans complexifier la ligne d'agitation (bras horizontal 30), qui est mieux illustrée par Fig. 13. Un arbre unique 30 porte deux dents d'agitation qui sont respectivement disposées dans chacun des deux fonds 11, disposés au dessus des deux disques d'épandage. Ce bras est animé d'un mouvement oscillant, qui permet, grâce aux dents d'agitation 31, d'agiter le produit 17 à épandre, pour en faciliter l'écoulement gravitaire.

Enfin, comme illustré par Fig. 14, il est possible de prévoir un asservissement 80 (moteur ou vérin électrique) du déplacement du levier de réglage 20, afin de permettre notamment un pilotage du réglage de la largeur d'épandage depuis la cabine du tracteur, sans déplacement de l'utilisateur. Le dispositif d'épandage selon ces différents modes de réalisation permet une précision d'épandage accrue, grâce à une intégration de l'axe de rotation de la goulotte 10 sur l'axe de révolution du plateau d'épandage 12, qui permet de conserver la géométrie de la nappe d'épandage, quel que soit le réglage de la largeur.

Le bon fonctionnement des autres organes du dispositif, tels que l'agitation ou le mécanisme d'épandage en bordure, ne sont ni perturbés ni complexifiés, par rapport à la solution antérieure. Les différents composants sont accessibles, ce qui facilite le nettoyage. Le faible impact du réglage de la largeur sur l'écart-type de l'angle de projection permet de rendre le système peu sensible à la typologie du produit à épandre et au débit d'épandage.

En outre, par rapport à la solution antérieure, la rotation de la goulotte selon l'axe de rotation des disques, donc sensiblement vertical, supprime toute variation d'inclinaison de la goulotte lors de son déplacement, ce qui permet un meilleur écoulement des particules à épandre, et permet d'atteindre de plus gros débits d'épandage. La modélisation et l'édition des tableaux de réglage d'épandage, fournis aux utilisateurs, sont simplifiées, du fait de l'absence de variation de la forme de la nappe d'épandage lors du déplacement de la goulotte.

## Revendications

1. Dispositif d'épandage de particules (17) stockées dans au moins une trémie (110) présentant au moins une ouverture de sortie délivrant des particules dans au moins une goulotte (10) dont une extrémité de sortie est placée au-dessus d'un disque (12) d'épandage rotatif recevant et projetant lesdites particules,
**caractérisé en ce que** ladite goulotte (10) est montée dans le prolongement d'un levier de réglage (20) mobile en rotation autour d'un axe de rotation sensiblement vertical coïncidant avec un axe de rotation (21) dudit disque d'épandage,
**et en ce qu'**il comprend un fond (11) de dosage formant partie inférieure de ladite au moins une trémie (110) et présentant une section circulaire sensiblement horizontale, dite portion circulaire, autour de laquelle se déplace ledit levier de réglage (20), sur au moins une portion dudit fond.

2. Dispositif d'épandage selon la revendication 1, **caractérisé en ce que** ledit levier de réglage (20) est solidarisé à une couronne de guidage (50) disposée sous ou sur la périphérie de ladite portion circulaire dudit fond (11) de dosage.

3. Dispositif d'épandage selon la revendication 2, **caractérisé en ce que** ladite portion circulaire dudit fond de dosage porte des éléments de support (51) de ladite couronne de guidage (50).

4. Dispositif d'épandage selon la revendication 3, **caractérisé en ce que** lesdits éléments de support (51) sont des éléments de support en matériau polymère fixés par le dessous à ladite portion circulaire dudit fond (11) de dosage, et **en ce que** ladite couronne de guidage (50) est guidée en rotation entre lesdits éléments de support (51) et ladite portion circulaire dudit fond (11) de dosage.

5. Dispositif d'épandage selon la revendication 3, **caractérisé en ce que** ladite couronne de guidage (50) présente une zone de contact linéaire avec lesdits éléments de support (51) et/ou ladite portion circulaire dudit fond (11) de dosage.

6. Dispositif d'épandage selon la revendication 5, **caractérisé en ce que** lesdits éléments de support (51) comprennent au moins une portion présentant une section sensiblement triangulaire de façon à présenter une zone de contact linéaire avec ladite couronne de guidage (50).

7. Dispositif d'épandage selon la revendication 5, **caractérisé en ce que** ladite couronne de guidage (50) présente une section sensiblement triangulaire de façon à présenter une zone de contact linéaire avec lesdits éléments de support (51) et/ou ladite portion circulaire dudit fond (11) de dosage.

8. Dispositif d'épandage selon l'une quelconque des revendications 1 à 7, **caractérisé en ce qu'il** comprend également un agitateur oscillant (31) porté par un arbre (30) sensiblement horizontal, disposé dans ledit fond de dosage.

9. Dispositif d'épandage selon la revendication 8, comprenant deux fonds (11) de dosage et deux disques (12) d'épandage, **caractérisé en ce que** ledit arbre (30) sensiblement horizontal porte deux agitateurs oscillants (31) disposés respectivement dans chacun desdits deux fonds de dosage.

## Patentansprüche

1. Streuvorrichtung für Partikel (17), die in mindestens einem Trichter (110) gespeichert sind, der mindestens eine Austrittsöffnung aufweist, die Partikel in mindestens eine Rutsche (10) abgibt, von der ein Austrittsende über einer drehenden Streuscheibe (12) platziert ist, welche die Partikel aufnimmt und auswirft,
**dadurch gekennzeichnet, dass** die Rutsche (10) in der Verlängerung eines Einstellhebels (20) angebracht ist, der um eine im Wesentlichen vertikale Drehachse, die mit einer Drehachse (21) der Streuscheibe zusammenfällt, drehbeweglich ist,
und dadurch, dass sie einen Dosierboden (11) umfasst, der einen unteren Teil des mindestens einen Trichters (110) bildet und an mindestens einem Abschnitt des Bodens einen als kreisförmiger Abschnitt bezeichneten, im Wesentlichen horizontalen kreisförmigen Querschnitt aufweist, um den sich der Einstellhebel (20) bewegt.

2. Streuvorrichtung nach Anspruch 1, **dadurch gekennzeichnet, dass** der Einstellhebel (20) fest mit einem Führungskranz (50) verbunden ist, der unter dem oder am Umfang des kreisförmigen Abschnitts des Dosierbodens (11) angeordnet ist.

3. Streuvorrichtung nach Anspruch 2, **dadurch gekennzeichnet, dass** der kreisförmige Abschnitt des Dosierbodens Halteelemente (51) für den Führungskranz (50) trägt.

4. Streuvorrichtung nach Anspruch 3, **dadurch gekennzeichnet, dass** die Halteelemente (51) Halteelemente aus Polymermaterial sind, die von unten am kreisförmigen Abschnitt des Dosierbodens (11) befestigt sind, und dadurch, dass der Führungskranz (50) zwischen den Halteelementen (51) und dem kreisförmigen Abschnitt des Dosierbodens (11) drehgeführt wird.

5. Streuvorrichtung nach Anspruch 3, **dadurch gekennzeichnet, dass** der Führungskranz (50) einen linearen Kontaktbereich mit den Halteelementen (51) und/oder dem kreisförmigen Abschnitt des Dosierbodens (11) aufweist.

6. Streuvorrichtung nach Anspruch 5, **dadurch gekennzeichnet, dass** die Halteelemente (51) mindestens einen Abschnitt umfassen, der einen im Wesentlichen dreieckigen Querschnitt aufweist, sodass sie einen linearen Kontaktbereich mit dem Führungskranz (50) aufweisen.

7. Streuvorrichtung nach Anspruch 5, **dadurch gekennzeichnet, dass** der Führungskranz (50) einen im Wesentlichen dreieckigen Querschnitt aufweist, sodass er einen linearen Kontaktbereich mit den Halteelementen (51) und/oder dem kreisförmigen Abschnitt des Dosierbodens (11) aufweist.

8. Streuvorrichtung nach einem der Ansprüche 1 bis 7, **dadurch gekennzeichnet, dass** sie ebenfalls einen oszillierenden Rührer (31) umfasst, der von einer im Wesentlichen horizontalen Welle (30) getragen wird, die im Dosierboden angeordnet ist.

9. Streuvorrichtung nach Anspruch 8, die zwei Dosierböden (11) und zwei Streuscheiben (12) umfasst, **dadurch gekennzeichnet, dass** die im Wesentlichen horizontale Welle (30) zwei oszillierende Rührer (31) trägt, die jeweils in jedem der zwei Dosierböden angeordnet sind.

## Claims

1. A device for spreading particles (17) stored in at least one hopper (110) having at least one outlet opening delivering particles into at least one chute (10) of which one outlet end is placed above a rotary spreading disc (12) receiving and projecting said particles,
**characterised in that** said chute (10) is mounted in the extension of an adjustment lever (20) which is movable in rotation about a substantially vertical axis of rotation coinciding with an axis of rotation (21) of said spreading disc,
**and in that** it comprises a metering bottom (11) forming the lower portion of said at least one hopper (110) and having a substantially horizontal circular section, called circular portion, around which said adjustment lever (20) is displaced, on at least one portion of said bottom.

2. The spreading device according to claim 1, **characterised in that** said adjustment lever (20) is secured to a guide ring (50) disposed under or on the periphery of said circular portion of said metering bottom (11).

3. The spreading device according to claim 2, **characterised in that** said circular portion of said metering bottom carries support elements (51) for said guide ring (50).

4. The spreading device according to claim 3, **characterised in that** said support elements (51) are support elements made of polymer material which are fastened from below to said circular portion of said metering bottom (11), and **in that** said guide ring (50) is guided in rotation between said support elements (51) and said circular portion of said metering bottom (11).

5. The spreading device according to claim 3, **characterised in that** said guide ring (50) has an area of linear contact with said support elements (51) and/or said circular portion of said metering bottom (11).

6. The spreading device according to claim 5, **characterised in that** said support elements (51) comprise at least one portion having a substantially triangular section so as to have an area of linear contact with said guide ring (50).

7. The spreading device according to claim 5, **characterised in that** said guide ring (50) has a substantially triangular section so as to have an area of linear contact with said support elements (51) and/or said circular portion of said metering bottom (11).

8. The spreading device according to any one of claims 1 to 7, **characterised in that** it also comprises an oscillating agitator (31) carried by a substantially horizontal shaft (30), disposed in said metering bottom.

9. The spreading device according to claim 8, comprising two metering bottoms (11) and two spreading discs (12), **characterised in that** said substantially horizontal shaft (30) carries two oscillating agitators (31) disposed respectively in each of said two metering bottoms.
